# EUROPÄISCHE PATENTANMELDUNG

(11) **EP 4 311 058 A1**
(43) Veröffentlichungstag der Anmeldung: **24.01.2024**
(21) Anmeldenummer: 22020347.5
(22) Anmeldetag: 20.07.2022
(51) Int. Cl.: H02J 3/28, H02J 15/00

(54) **VERFAHREN UND ANLAGE ZUR HERSTELLUNG VON WASSERSTOFF**

(71) Anmelder: Linde GmbH, 82049 Pullach (DE)
(72) Erfinder: Peschel, Andreas, 82049 Pullach (DE); Liebhart, Christian, 82049 Pullach (DE)
(74) Vertreter: Fischer, Werner

(57) **Zusammenfassung**

Es wird ein Verfahren zur Herstellung von Wasserstoff mittels Wasserelektrolyse vorgeschlagen, bei dem zumindest in einem ersten Betriebsmodus einer oder mehreren Elektrolyseeinheiten (10) Elektrolysegleichstrom zugeführt wird, wobei der Elektrolysegleichstrom unter Verwendung einer Stromwandelanordnung (20) aus Netzstrom bereitgestellt wird, wobei die Stromwandelanordnung (20) eine oder mehrere motorisch betreibbare erste elektrische Maschinen (M) und eine oder mehrere generatorisch betreibbare zweite elektrische Maschinen (G) aufweist, wobei die eine oder die mehreren ersten elektrischen Maschinen (M) unter Verwendung des Netzstroms betrieben wird oder werden, wobei die eine oder die mehreren zweiten elektrischen Maschinen (G) unter Verwendung der einen oder der mehreren ersten elektrischen Maschinen (M) angetrieben wird oder werden, und wobei der Elektrolysegleichstrom unter Verwendung der einen oder der mehreren zweiten elektrischen Maschinen (G) bereitgestellt wird. Eine entsprechende Anlage (100, 200) ist ebenfalls Gegenstand der vorliegenden Erfindung.

## Beschreibung

Die Erfindung betrifft ein Verfahren und eine Anlage zur Herstellung von Wasserstoff.

### Hintergrund

Die Wasserstoffherstellung im industriellen Maßstab basiert derzeit noch hauptsächlich auf Kohlenwasserstoffen und umfasst beispielsweise die Dampfreformierung von Erdgas oder anderen gasförmigen Einsätzen. Anstelle einer erneuten Erläuterung des bereits Bekannten wird auf einschlägige Fachliteratur wie die Artikel "Gas Production, 2. Processes" und "Hydrogen, 2. Production" in Ullmann's Encyclopedia of Industrial Chemistry" (bspw. Ausgabe 2012) verwiesen.

Um regenerativ erzeugten elektrischen Strom nutzen und Kohlendioxidemissionen reduzieren zu können, wird zunehmend auch die Wasserelektrolyse zur Herstellung von Wasserstoff eingesetzt. Auch Sauerstoff kann durch eine entsprechende Wasserelektrolyse hergestellt werden.

Bei der klassischen Wasserelektrolyse wird eine wässrige alkalische Lösung, typischerweise von Kaliumhydroxid, als Elektrolyt verwendet (AEL, Alkalische Elektrolyse). Die Elektrolyse mit einer uni- oder bipolaren Elektrodenanordnung erfolgt dabei bei Atmosphärendruck oder im industriellen Maßstab auch deutlich darüber. Neuere Entwicklungen bei der Wasserelektrolyse umfassen die Verwendung von protonenleitenden lonenaustauschmembranen (SPE, Solid Polymer Electrolysis; PEM, Proton Exchange Membranes), wobei das zu elektrolysierende Wasser an der Anodenseite bereitgestellt wird. Auch Elektrolysetechnologien unter Verwendung einer Anionenaustauschermembran (AEM, Anion Exchange Membrane) werden eingesetzt.

Die bisher genannten Verfahren der Wasserelektrolyse zählen zu den Niedertemperaturverfahren, bei denen das zu elektrolysierende Wasser in der Flüssigphase vorliegt. Daneben wird auch die sogenannte Dampfelektrolyse eingesetzt, die ebenfalls mit alkalischen Elektrolyten (also als AEL) mit angepassten Membranen, beispielsweise Polysulfonmembranen, sowie unter Verwendung von Festoxidelektrolysezellen (SOEC, Solid Oxide Electrolysis Cells) durchgeführt werden können. Letztere umfassen insbesondere dotiertes Zirkondioxid oder Oxide Seltener Erden, die bei hohen Temperaturen leitfähig werden.

Der Begriff der Elektrolyse soll nachfolgend sämtliche dieser Verfahren umfassen. Insbesondere die Niedertemperaturelektrolysen (PEM, AEL, AEM) eignen sich für einen flexiblen Betrieb, der den Energieübergang zu erneuerbaren Energien unterstützt. Sämtliche Varianten können in der vorliegenden Erfindung eingesetzt werden.

Die vorliegende Erfindung stellt sich die Aufgabe, entsprechende Verfahren zu verbessern und insbesondere flexibler und energieeffizienter zu gestalten.

### Offenbarung der Erfindung

Diese Aufgabe wird durch ein Verfahren und eine Anlage zur Herstellung von Wasserstoff mit den Merkmalen der jeweiligen unabhängigen Patentansprüche gelöst. Ausgestaltungen sind Gegenstand der abhängigen Patentansprüche und der nachfolgenden Beschreibung.

Die vorliegende Erfindung und Ausgestaltungen hiervon beruhen insbesondere auf der Erkenntnis, dass die Verwendung einer Anordnung aus elektrischen Maschinen als Stromwandelanordnung bzw. Stromversorgungseinheit in den zuvor erläuterten Einsatzgebieten besonders vorteilhaft ist.

Insgesamt schlägt die vorliegende Erfindung dabei ein Verfahren zur Herstellung von Wasserstoff mittels Wasserelektrolyse vor, bei dem zumindest in einem ersten Betriebsmodus einer oder mehreren Elektrolyseeinheiten Elektrolysegleichstrom zugeführt wird, und wobei der Elektrolysegleichstrom unter Verwendung einer Stromwandelanordnung aus Netzstrom bereitgestellt wird.

Im Rahmen von Ausgestaltungen der vorliegenden Erfindung ist dabei eine dauerhafte und ununterbrochene Durchführung eines derartigen ersten Betriebsmodus möglich, es können jedoch auch andere Betriebsmodi vorgesehen sein, wie weiter unten noch unter Bezugnahme auf eine Ausgestaltung der vorliegenden Erfindung erläutert.

Ausgestaltungen der vorliegenden Erfindung sehen dabei vor, dass die Stromwandelanordnung eine oder mehrere motorisch betreibbare erste elektrische Maschinen und eine oder mehrere generatorisch betreibbare zweite elektrische Maschinen aufweist, wobei die eine oder die mehreren ersten elektrischen Maschinen unter Verwendung des Netzstroms betrieben wird oder werden, wobei die eine oder die mehreren zweiten elektrischen Maschinen unter Verwendung der einen oder der mehreren ersten elektrischen Maschinen (mechanisch) angetrieben wird oder werden, und wobei der Elektrolysegleichstrom unter Verwendung der einen oder der mehreren zweiten elektrischen Maschinen bereitgestellt wird.

Die vorliegende Erfindung und Ausgestaltungen hiervon können insbesondere zu einer Senkung der Investitionskosten beitragen. Dies wird insbesondere durch die Vermeidung von Rückkopplungseffekten ins Stromnetz durch Oberschwingungen erreicht, so dass der Einsatz von Elektrolyseuren in großem Maßstab ohne negative Rückkopplung auf das Netz und dessen Betriebsfähigkeit möglich wird. Eine Installation zusätzlicher Filter zur Reduzierung von Rückkopplungen zur Unterdrückung von Oberschwingungen kann dabei vermieden werden. Entsprechendes gilt für die Bereitstellung von Maßnahmen zur Blindleistungskompensation, wie sie für herkömmliche Gleichrichter erforderlich sind, um den verursachten Blindleistungsbedarf auszugleichen. Es ergibt sich insgesamt ein geringerer spezifischer Materialverbrauch (insbesondere von Kupfer) im Vergleich zu nicht erfindungsgemäßen bzw. herkömmlichen Lösungen.

Durch den Einsatz von Ausgestaltungen der vorliegenden Erfindung ist die Anpassung von erneuerbaren Gleichstromquellen (z.B. aus Photovoltaikanlagen) an die gewünschte Gleichspannung für die Elektrolyse ohne zusätzliche Ausrüstung möglich. Es kann insbesondere eine übergangslose Leistungsregelung bzw. ein entsprechendes Ramping, insbesondere bei Laständerungen und als Reaktion auf die Degradation der Elektrolyseeinheit, vorgesehen sein.

Ausgestaltungen der vorliegenden Erfindung können insbesondere bei Verwendung geeigneter Designs der vorgeschlagenen Anordnungen aus elektrischen Maschinen in Umgebungen, die wegen explosiver Atmosphären (ATEX) als gefährlich klassifiziert sind, eingesetzt werden.

Insbesondere ist in Ausgestaltungen der vorliegenden Erfindung ein Betrieb derartiger Anordnungen "in beiden Richtungen" möglich, wie weiter unten noch unter Bezugnahme auf entsprechende Ausgestaltungen im Detail erläutert. Mit anderen Worten, können entsprechende Anordnungen die Elektrolyse einerseits mit Strom versorgen, aber auch im Falle eines Brennstoffzellenbetriebs Strom zurück ins Netz speisen. Dies ist insbesondere relevant für kombinierte Installationen aus Festoxidelektrolyse- und -brennstoffzellen (engl. Solid Oxid Electrolysis Cells, SOEC, Solid Oxide Fuel Cells, SOFC).

Durch den Einsatz der vorliegenden Erfindung und Ausgestaltungen hiervon kann insbesondere auf knappe Halbleiter verzichtet werden. Energetische Vorteile können insbesondere durch eine in Ausgestaltungen der vorliegenden Erfindung vorgesehene Nutzung von Abwärme, bspw. zur Beheizung eines Maschinenhauses, erzielt werden, wie auch unten noch erläutert.

Die Vorteile der im Rahmen der vorliegenden Erfindung und entsprechenden Ausgestaltungen vorgeschlagenen Maßnahmen werden nachfolgend nochmals mit anderen Worten und ausgehend von nicht erfindungsgemäßen Lösungen gemäß dem Stand der Technik erörtert.

Um Wechselstrom (aus dem Stromnetz, einer anderen Wechselstromquelle oder aus erneuerbaren Energien) in einer Elektrolyse nutzen zu können, ist ein Gleichrichter erforderlich. Verwendbare Gleichrichter sind typischerweise mit Thyristoren oder Bipolartransistoren mit isolierter Gate-Elektrode (engl.: Insulated-Gate Bipolar Transistor, IGBT) ausgebildet und verursachen Netzrückwirkungen durch harmonische Oberwellen, die durch den Phasenanschnitt im Gleichrichter hervorgerufen werden. Um diese Oberwellen zu vermeiden, kann grundsätzlich eine Halbwellen- und Vollwellensteuerung eingesetzt werden.

Darüber hinaus benötigen entsprechende Gleichrichter Blindleistung aus dem Netz. Dies ist besonders bei schwachen Netzen oder Stromquellen wichtig, die nicht an ein übergeordnetes Netz angeschlossen sind (z.B. in Offshore-Windparks oder Solarparks bzw. Photovoltaikparks). In Photovoltaikparks muss der von den Photovoltaikmodulen erzeugte Gleichstrom zunächst in Wechselstrom umgewandelt werden, bevor er im Netz weiterverarbeitet wird. In Windparks ist dies zur Frequenzkontrolle oft umgekehrt. In beiden Fällen sind jedoch erhebliche Investitionskosten für die Stromumwandlung von Wechselstrom zu Gleichstrom oder umgekehrt erforderlich.

Im Falle einer zunehmenden Anzahl von Elektrolyseuren, die zur Netzstabilisierung und zur großflächigen Nutzung von erneuerbaren Energien bereitgestellt werden, muss mit Einschränkungen hinsichtlich der Rückspeisung durch den Netzbetreiber gerechnet werden, was es erforderlich macht, Rückspeisefilter und Mittel zur Blindleistungskompensation zu installieren. Beides führt zu zusätzlichen Kosten und reduziertem Wirkungsgrad.

Sämtliche der soeben erläuterten Nachteile können durch den Einsatz der vorliegenden Erfindung und entsprechenden Ausgestaltungen vermieden werden.

Zwar können im Rahmen der vorliegenden Erfindung ebenfalls Halbleiterelemente (z.B. Dioden, Thyristoren, IGBT), insbesondere auf der Seite der generatorisch betreibbaren elektrischen Maschine, ergänzt werden. Diese Halbleiterelemente sind dann aber mechanisch und elektrisch von der Netzseite getrennt und verursachen somit auch keine Netzrückwirkungen.

Die vorliegende Erfindung kann in diesem Zusammenhang auf der Seite der generatorisch betreibbaren elektrischen Maschine sowohl Gleichspannung als auch Wechselspannung in beliebiger Frequenz generieren. Beispielsweise kann dabei eine Wechselspannung höherer Frequenz generiert werden, die dann durch eine Diodenbrücke (oder Halbleiterbrücke) gleichgerichtet wird. Damit weist eine im Rahmen der vorliegenden Erfindung einsetzbare Stromwandelanordnung nicht notwendigerweise nur die motorisch betreibbare(n) erste(n) elektrische(n) Maschine(n) und die generatorisch betreibbare(n) zweite(n) elektrische(n) Maschine(n) auf, sondern es können auch entsprechende Mittel zur Gleichrichtung einer ggf. mittels der zweite(n) elektrische(n) Maschine(n) bereitgestellten Wechselspannung bereitgestellt sein. Wenn daher hier die Rede davon ist, dass der Elektrolysegleichstrom "unter Verwendung der einen oder der mehreren zweiten elektrischen Maschinen bereitgestellt wird", kann eine derartige Bereitstellung zusätzlich auch die Verwendung eines oder mehrerer Gleichrichter umfassen. Solche Gleichrichter können in jeglicher fachüblichen Weise ausgebildet sein, und beispielsweise Diodenbrücken und Halbleiterelemente bzw. Leistungselektronik aufweisen.

Generell wird hier unter einer "elektrischen Maschine" eine rotierende elektrische Maschine verstanden, insbesondere ein Elektromotor beliebiger Bauart oder ein Generator beliebiger Bauart. Eine "motorisch betreibbare" oder "motorisch betriebene" elektrische Maschine arbeitet nach Art eines Elektromotors. Sie dient der Umsetzung elektrischer Leistung in mechanische Leistung an einer Welle. Eine "generatorisch betreibbare" oder "generatorisch betriebene" elektrische Maschine arbeitet nach Art eines elektrischen Generators und setzt mechanische Leistung in elektrische Leistung um. Bestimmte Typen elektrischer Maschinen, die dem Fachmann an sich bekannt sind, können sowohl als Motor (motorisch) als auch als Generator (generatorisch) betrieben werden, wobei ihre konkrete Funktion durch den Betriebsbereich der Maschine bestimmt wird. Derartige elektrische Maschinen können insbesondere in weiter unten erläuterten Ausgestaltungen der vorliegenden Erfindung zum Einsatz kommen.

Zur Vermeidung von Missverständnissen sei festgehalten, dass die eine oder die mehreren ersten elektrischen Maschinen in dem ersten Betriebsmodus motorisch betrieben wird bzw. werden, und dass die eine oder die mehreren zweiten elektrischen Maschinen in dem ersten Betriebsmodus generatorisch betrieben wird bzw. werden. In einem (optionalen) zweiten Betriebsmodus kann dies umgekehrt sein.

In Ausgestaltungen der vorliegenden Erfindung kann bzw. können eine oder mehrere Elektrolyseeinheiten bereitgestellt sein, der bzw. denen zumindest ein Teil des Elektrolysegleichstroms zugeführt wird, der mittels der einen oder zumindest einer der mehreren ersten elektrischen Maschinen bereitgestellt wird. Mit anderen Worten kann neben einer 1:1-Anordnung aus Stromwandeleinheit und Elektrolyseeinheit auch eine 1:2-, 2:1-, 1:3-, 3:1- oder beliebige andere Anordnung (wobei die erste Zahl jeweils die Anzahl der Stromwandeleinheit(en) und die zweite Zahl jeweils die Anzahl der Elektrolyseeinheit(en) bezeichnet) zum Einsatz kommen, sofern dies in entsprechenden Ausgestaltungen zweckmäßig ist.

In Ausgestaltungen der vorliegenden Erfindung kann der Netzstrom Wechselstrom oder Gleichstrom sein und die erste(n) elektrische(n) Maschine(n) kann bzw. können an eine entsprechende Stromform angepasst sein. Ausgestaltungen der vorliegenden Erfindung sind damit vorteilhaft mit unterschiedlichen Stromformen nutzbar.

Der Netzstrom kann insbesondere auf einem Spannungsniveau von mehr als 3, mehr als 5, mehr als 6 oder mehr als 10 kV und beispielsweise bis zu 200 kV bereitgestellt werden. Die in Ausgestaltungen der vorliegenden Erfindung bereitgestellte Stromwandeleinheit kann vorteilhafterweise direkt an eine entsprechende Netzspannung angebunden werden. Dies ist insbesondere dann möglich, wenn die weiter unten erläuterten Hochvoltmotoren zum Einsatz kommen.

In Ausgestaltungen der vorliegenden Erfindung kann bzw. können die erste(n) elektrische(n) Maschine(n) und die zweite(n) elektrische(n) Maschinen insbesondere auch durch ein festes bzw. schaltbares Getriebe mechanisch miteinander gekoppelt sein, um ggf. eine Drehzahl und ein Drehmoment in geeigneter Weise zu beeinflussen. Auf diese Weise ist eine entsprechende Anordnung besonders flexibel betreibbar. Auch eine Anbindung mehrerer zweiter elektrischer Maschinen an (jeweils) eine erste elektrische Maschine oder umgekehrt ist möglich. Auch eine getriebelose Kopplung, beispielsweise über eine gemeinsame Welle, ist möglich, wodurch sich eine besonders wartungsarme Konfiguration ergibt.

Insbesondere kann bzw. können in entsprechenden Ausgestaltungen die eine oder zumindest eine der mehreren ersten elektrischen Maschinen als Wechselstromsynchronmotor oder als Gleichstrommotor ausgebildet sein. Hierbei handelt es sich um besonders vorteilhaft mit der jeweiligen Stromform nutzbare erste elektrische Maschinen. Mittels eines Synchronmotors kann insbesondere ohne zusätzliche Bereitstellung weiterer Mittel Blindleistung bereitgestellt werden. Ferner werden hierbei keine rückwirkenden Oberschwingungen erzeugt.

Die im Rahmen der vorliegenden Erfindung und Ausgestaltungen hiervon eingesetzten Anordnungen aus elektrischen Maschinen sind aufgrund ihrer Trägheit insbesondere auch in der Lage, kurzzeitige Spannungsausfälle zu überbrücken. Die vorliegende Erfindung wirkt sich netzstabilisierend aus, kinetische Rotationsenergie stützt das Netz bei kurzfristigen Spannungs- und/oder Frequenzeinbrüchen. Im Gegenzug kann die vorliegende Erfindung bei kurzfristigen Frequenz- und/oder Spannungsüberhöhungen Energie aus dem Netz entnehmen und in Form von kinetischer Energie speichern. In solchen Fällen werden Maschinen beschleunigt und können somit überschüssige Energie aus dem Netz aufnehmen. Beides zusammen dient somit als Momentanreserve. Die im Rahmen der vorliegenden Erfindung vorgeschlagenen Maßnahmen können für eine netzdienliche Leistungsregelung verwendet werden. Zur Vergütung entsprechender elektrischer Leistung können geeignete EZA- bzw. Parkregler gemäß jeweils anwendbarer Normwerke bereitgestellt werden.

In einer Ausgestaltung der vorliegenden Erfindung kann bzw. können zumindest eine der mehreren ersten elektrischen Maschinen als kabelgewickelter Hochvoltmotor (engl. Cable Wound HV Motor) ausgebildet sein, beispielsweise wie in ABB Review 1/2001, Seite 22 bis 25, und der darin zitierten Literatur beschrieben. Auf diese Weise können beispielsweise Hochspannungen von bis zu 152 kV direkt und ohne Transformator in eine entsprechende elektrische Maschine eingespeist werden.

In Ausgestaltungen der vorliegenden Erfindung ist bzw. sind die eine oder die mehreren ersten elektrischen Maschinen ferner generatorisch betreibbar und die eine die mehreren zweiten elektrischen Maschinen ist oder sind ferner motorisch betreibbar, also jeweils in "umgekehrter Richtung" wie zuvor erläutert.

In einem zweiten Betriebsmodus, der insbesondere in einem Zeitraum durchgeführt wird, in dem der erste Betriebsmodus nicht durchgeführt wird, wird bzw. werden die eine oder zumindest eine der mehreren Elektrolyseeinheiten unter Bereitstellung von Brennstoffzellengleichstrom als eine oder mehrere Brennstoffzellen betrieben. Sie liefert bzw. liefern also entsprechenden Strom. Es kann aber auch vorgesehen sein, dass eine oder mehrere Brennstoffzellen zusätzlich bereitgestellt sind und diese entsprechenden Brennstoffzellengleichstrom liefert bzw. liefern. Die eine oder die mehreren zweiten elektrischen Maschinen, die in diesem Fall motorisch betrieben wird bzw. werden, wird bzw. werden dabei unter Verwendung des Brennstoffzellengleichstroms betrieben, und die eine oder die mehreren ersten elektrischen Maschinen die in diesem Fall generatorisch betrieben wird bzw. werden, wird bzw. werden hingegen unter Verwendung der einen oder der mehreren zweiten elektrischen Maschinen angetrieben. Unter Verwendung der einen oder der ersten elektrischen Maschinen bereitgestellter Strom kann als Netzstrom bereitgestellt und in ein entsprechendes Netz eingespeist werden. Dies ist insbesondere bei Insellösungen und zur Unterstützung bei zeitweise geringer Netzleistung von Vorteil.

In einer derartigen Ausgestaltung der Erfindung kann insbesondere vorgesehen sein, dass die eine oder zumindest eine der mehreren Elektrolyseeinheiten in dem ersten Betriebsmodus als zumindest eine Festoxidelektrolysezelle und in dem zweiten Betriebsmodus als zumindest eine Festoxidbrennstoffzelle betrieben wird oder werden. Im Falle einer Bereitstellung einer oder mehrerer zusätzlicher Brennstoffzellen kann bzw. können diese als Festoxidbrennstoffzelle(n) betrieben werden Auch eine Anordnung mit (separaten) Brennstoff- und Elektrolysezellen ist möglich, so dass eine entsprechende Anordnung vorteilhaft an den jeweiligen Zweck anpassbar ist.

In Ausgestaltungen der vorliegenden Erfindung kann bzw. können die eine oder zumindest eine der mehreren Elektrolyseeinheiten für eine alkalische Elektrolyse mit einer uni- oder bipolaren Elektrodenanordnung und/oder für eine Chlor-Alkali-Elektrolyse eingerichtet sein und/oder unter Verwendung einer protonenleitenden lonenaustauschmembran oder unter Verwendung einer Anionenaustauschermembran betrieben werden. Sämtliche Ausgestaltungen von entsprechenden Elektrolyseeinheiten, wie sie zuvor erläutert wurden, sind in Ausgestaltungen der Erfindung einsetzbar.

In Ausgestaltungen der vorliegenden Erfindung kann der Netzstrom Strom sein, der unter Verwendung einer oder mehrerer Photovoltaikanlagen, unter Verwendung einer oder mehrerer Windkraftanlagen und/oder unter Verwendung einer oder mehrerer Stromspeichereinheiten in ein Netz eingespeist wird. Die vorliegende Erfindung und Ausgestaltungen hiervon sind insbesondere in derartigen Ausgestaltungen vorteilhaft, und zwar aus den bereits mehrfach erwähnten Gründen.

Ausgestaltungen der vorliegenden Erfindung umfassen, dass Abwärme der Stromwandelanordnung zumindest zu einem Teil in der einen oder zumindest einer der mehreren Elektrolyseeinheiten genutzt wird. Auch eine Beheizung eines Maschinenhauses und dergleichen ist hierbei möglich. In entsprechenden Gebäuden kann ein erhöhter Luftaustausch, insbesondere für die Abfuhr von austretendem Wasserstoff, vorteilhaft sein, so dass eine erhöhte Heizleistung erforderlich ist. Insbesondere beheizte Elektrolyseeinheiten wie Festoxidzellen sind in entsprechenden Ausgestaltungen vorteilhaft betreibbar.

In Ausgestaltungen der vorliegenden Erfindung kann vorgesehen sein, dass in dem ersten Betriebsmodus mittels der einen oder der mehreren, generatorisch betreibbaren, und in dem ersten Betriebsmodus generatorisch betriebenen, zweiten elektrischen Maschinen Wechselstrom generiert wird, der mittels einer oder mehrerer Gleichrichteranordnungen (bspw. Dioden- oder Thyristorgleichrichter) in den Elektrolysewechselstrom gewandelt wird. Dies wurde bereits zuvor erläutert. Ein entsprechender Gleichrichter kann insbesondere mittels an sich bekannter Steuer- oder Regelungsmittel angesteuert werden.

Eine Anlage zur Herstellung von Wasserstoff mittels Wasserelektrolyse, die eine oder mehrere Elektrolyseeinheiten und eine Stromwandelanordnung aufweist und dafür eingerichtet ist, zumindest in einem ersten Betriebsmodus der einen oder den mehreren Elektrolyseeinheiten Elektrolysegleichstrom zuzuführen und den Elektrolysegleichstrom unter Verwendung der Stromwandelanordnung aus Netzstrom bereitzustellen, ist ebenfalls Gegenstand der vorliegenden Erfindung.

Die Stromwandelanordnung weist eine oder mehrere motorisch betreibbare erste elektrische Maschinen und eine oder mehrere generatorisch betreibbare zweite elektrische Maschinen auf, wobei die Anlage dafür eingerichtet ist, die eine oder die mehreren ersten elektrischen Maschinen unter Verwendung des Netzstroms zu betreiben, die eine oder die mehreren zweiten elektrischen Maschinen unter Verwendung der einen oder der mehreren ersten elektrischen Maschinen anzutreiben, und den Elektrolysegleichstrom unter Verwendung der einen oder der mehreren zweiten elektrischen Maschinen bereitzustellen.

Zu weiteren Merkmalen und Vorteilen einer entsprechenden Anlage sei auf die Beschreibung des erfindungsgemäßen Verfahrens und entsprechender Ausgestaltungen ausdrücklich verwiesen, da diese die Anlage in ihren unterschiedlichen Ausgestaltungen in gleicher Weise betreffen.

Auch eine entsprechende Anlage, mittels derer ein zuvor beschriebenes Verfahren in unterschiedlichen Ausgestaltungen durchgeführt sein kann, und die insbesondere entsprechende Mittel aufweist und zur Durchführung eines solchen Verfahrens eingerichtet ist, kann Gegenstand von Ausgestaltungen der Erfindung sein.

Die Erfindung wird nachfolgend unter Bezugnahme auf die Zeichnungen, die eine Ausgestaltung der vorliegenden Erfindung veranschaulicht, weiter erläutert.

### Kurze Beschreibung der Zeichnungen

Figur 1 veranschaulicht eine Anlage gemäß einer Ausgestaltung der Erfindung.
Figur 2 veranschaulicht eine Anlage gemäß einer Ausgestaltung der Erfindung.
Figur 3 veranschaulicht eine Anlage gemäß einer Ausgestaltung der Erfindung.
Figur 4 veranschaulicht eine Anlage gemäß Figur 1 in einem zweiten Betriebsmodus.

In den Figuren sind einander entsprechende bzw. funktional und/oder baulich gleiche, im Wesentlichen gleiche oder einander entsprechende Elemente mit identischen Bezugszeichen angegeben, wobei Anlagenkomponenten betreffende Erläuterungen Verfahrensschritte in gleicher Weise betreffen und umgekehrt.

### Ausführliche Beschreibung der Zeichnungen

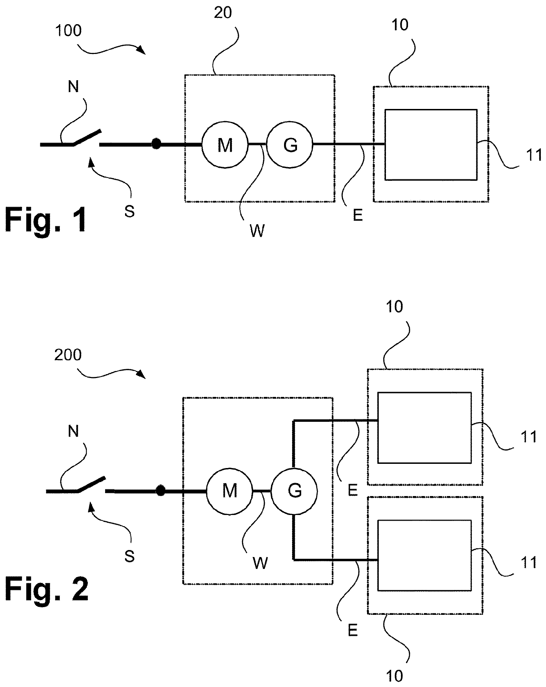

In Figur 1 ist eine Anlage gemäß einer Ausgestaltung der Erfindung in Form eines stark vereinfachten Anlagendiagramms veranschaulicht und insgesamt mit 100 bezeichnet.

Die in Figur 1 veranschaulichte Anlage 100 ist zur Herstellung von Wasserstoff mittels Wasserelektrolyse eingerichtet und weist dazu eine oder mehrere Elektrolyseeinheiten 10 der zuvor erläuterten Art auf. Eine oder mehrere Elektrolyseure bzw. Elektrolysezellen sind nochmals mit 11 veranschaulicht. Ferner ist in der Anlage 100 eine Stromwandelanordnung 20 bereitgestellt.

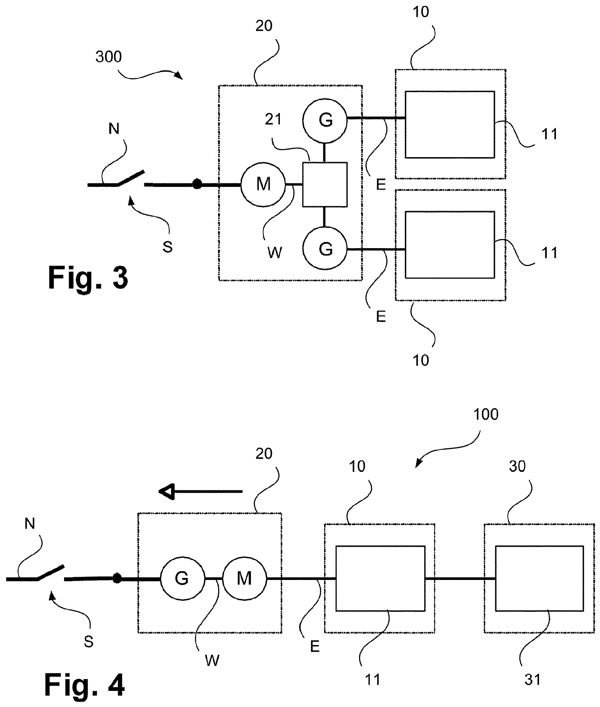

Die Anlage 100 ist zumindest in einem ersten Betriebsmodus (ein optionaler zweiter Betriebsmodus wird unter Bezugnahme auf Figur 3 erläutert) dafür eingerichtet, der einen oder den mehreren Elektrolyseeinheiten 10 Elektrolysegleichstrom über eine oder mehrere, mit E bezeichnete Leitungen zuzuführen, und den Elektrolysegleichstrom E unter Verwendung der Stromwandelanordnung 20 aus Netzstrom bereitzustellen, der in einem Stromnetz N fließt.

Während in herkömmlichen Anlagen eine entsprechende Stromwandelanordnung mittels Halbleitern ausgebildet ist, weist die in Ausgestaltungen der Erfindung bereitgestellte Stromwandelanordnung 20 eine oder mehrere motorisch betreibbare erste elektrische Maschinen M und eine oder mehrere generatorisch betreibbare zweite elektrische Maschinen G auf. Diese können jeweils als Motor(en) bzw. Generator(en) bzw. in Ausgestaltungen der Erfindung als in "beide Richtungen" betreibbare elektrische Maschinen M, G jeweils beliebiger Art ausgebildet sein, wie mehrfach erläutert.

Die Anlage 100 ist dafür eingerichtet, die eine oder die mehreren ersten elektrischen Maschinen M unter Verwendung des Netzstroms aus dem Netz N zu betreiben, die eine oder die mehreren zweiten elektrischen Maschinen G unter Verwendung der einen oder der mehreren ersten elektrischen Maschinen M, insbesondere über eine Welle W, anzutreiben, und den Elektrolysegleichstrom unter Verwendung der einen oder der mehreren zweiten elektrischen Maschinen G bereitzustellen. Ein Schalter S kann zur Ankoppelung an das bzw. Abkoppelung von dem Netz N vorgesehen sein.

Figur 2 veranschaulicht eine Anlage gemäß einer weiteren Ausgestaltung der Erfindung, die insgesamt mit 200 bezeichnet ist.

Die in Figur 2 veranschaulichte Anlage 200 unterscheidet sich von der in Figur 1 veranschaulichten Anlage 100 insbesondere durch die Bereitstellung von zwei Elektrolyseeinheiten 10, die an eine Stromwandelanordnung 20 bzw. eine zweite elektrische Maschine G angeschlossen sind. Alternative Ausgestaltungen wurden bereits mehrfach angesprochen.

Figur 3 veranschaulicht eine Anlage gemäß einer weiteren Ausgestaltung der Erfindung, die insgesamt mit 300 bezeichnet ist.

Die in Figur 3 veranschaulichte Anlage 300 unterscheidet sich von der in Figur 1 veranschaulichten Anlage 100 und insbesondere durch die Anbindung zweier generatorisch betreibbarer zweiter elektrischer Maschinen G an eine motorisch betreibbare erste elektrische Maschine M. Hier kann insbesondere eine geeignete Einrichtung 21 bereitgestellt sein, die das Drehmoment der Welle W in die zwei zweiten elektrischen Maschinen G einleitet, beispielsweise ein Getriebe.

Es handelt sich hier nur um ein Beispiel, so dass auch eine beliebige andere Anzahl zweiter elektrischer Maschinen G an eine erste elektrische Maschinen M oder an mehrere erste elektrische Maschinen M angebunden werden kann und umgekehrt.

Figur 4 veranschaulicht eine Anlage gemäß Figur 1, die hier weiter mit 100 bezeichnet ist, in einem zweiten Betriebsmodus.

In der in Figur 4 veranschaulichten Ausgestaltung ist bzw. sind die eine oder die mehreren ersten elektrischen Maschinen M (auch) generatorisch betreibbar und die eine oder die mehreren zweiten elektrischen Maschinen G ist bzw. sind (auch) motorisch betreibbar.

In dem in Figur 3 veranschaulichten zweiten Verfahrensmodus wird bzw. werden, wie mittels eines Pfeils verdeutlicht, die eine oder zumindest eine der mehreren Elektrolyseeinheiten 10 unter Bereitstellung von Brennstoffzellengleichstrom als eine oder mehrere Brennstoffzellen betrieben. Es ist auch möglich, zusätzliche Brennstoffzellenanordnungen bereitzustellen, wie zusätzlich mit einer entsprechenden Anordnung 30 mit Brennstoffzelle(n) 31 veranschaulicht.

Die eine oder die mehreren zweiten elektrischen Maschinen G wird bzw. werden unter Verwendung des Brennstoffzellengleichstroms betrieben und die eine oder die mehreren ersten elektrischen Maschinen M wird bzw. werden unter Verwendung der einen oder der mehreren zweiten elektrischen Maschinen M angetrieben. Unter Verwendung der einen oder der ersten elektrischen Maschinen G bereitgestellter Strom wird als Netzstrom bereitgestellt und in das Netz N eingespeist.

## Patentansprüche

1. Verfahren zur Herstellung von Wasserstoff mittels Wasserelektrolyse, bei dem zumindest in einem ersten Betriebsmodus einer oder mehreren Elektrolyseeinheiten (10) Elektrolysegleichstrom zugeführt wird, wobei der Elektrolysegleichstrom unter Verwendung einer Stromwandelanordnung (20) aus Netzstrom bereitgestellt wird, wobei die Stromwandelanordnung (20) eine oder mehrere motorisch betreibbare erste elektrische Maschinen (M) und eine oder mehrere generatorisch betreibbare zweite elektrische Maschinen (G) aufweist, wobei die eine oder die mehreren ersten elektrischen Maschinen (M) unter Verwendung des Netzstroms betrieben wird oder werden, wobei die eine oder die mehreren zweiten elektrischen Maschinen (G) unter Verwendung der einen oder der mehreren ersten elektrischen Maschinen (M) angetrieben wird oder werden, und wobei der Elektrolysegleichstrom unter Verwendung der einen oder der mehreren zweiten elektrischen Maschinen (G) bereitgestellt wird.

2. Verfahren nach Anspruch 1, bei dem eine oder mehrere Elektrolyseeinheiten (10) bereitgestellt sind, denen zumindest ein Teil des Elektrolysegleichstroms zugeführt wird, der mittels der einen oder zumindest einer der mehreren ersten elektrischen Maschinen (G) bereitgestellt wird.

3. Verfahren nach Anspruch 1 oder Anspruch 2, bei dem der Netzstrom Wechselstrom oder Gleichstrom ist.

4. Verfahren nach einem der vorstehenden Ansprüche, bei dem der Netzstrom auf einem Spannungsniveau von mehr als 3, mehr als 6 oder mehr als 10 kV bereitgestellt wird

5. Verfahren nach einem der vorstehenden Ansprüche, bei dem die eine oder zumindest eine der mehreren ersten elektrischen Maschinen (M) als Wechselstromsynchronmotor oder als Gleichstrommotor ausgebildet ist.

6. Verfahren nach Anspruch 5, bei dem zumindest eine der mehreren ersten elektrischen Maschinen (M) als kabelgewickelter Hochvoltmotor ausgebildet ist.

7. Verfahren nach einem der vorstehenden Ansprüche, bei dem die eine oder die mehreren ersten elektrischen Maschinen (M) ferner generatorisch betreibbar ist oder sind und die eine die mehreren zweiten elektrischen Maschinen (G) ferner motorisch betreibbar ist oder sind, wobei in einem zweiten Verfahrensmodus die eine oder zumindest eine der mehreren Elektrolyseeinheiten (10) unter Bereitstellung von Brennstoffzellengleichstrom als eine oder mehrere Brennstoffzellen betrieben wird oder werden und/oder eine oder mehrere zusätzlich zu der einen oder den mehreren Elektrolyseeinheiten (10) bereitgestellte Brennstoffzellen unter Bereitstellung von Brennstoffzellengleichstrom betrieben werden, wobei die eine oder die mehreren zweiten elektrischen Maschinen (G) unter Verwendung des Brennstoffzellengleichstroms betrieben wird oder werden, wobei die eine oder die mehreren ersten elektrischen Maschinen (M) unter Verwendung der einen oder der mehreren zweiten elektrischen Maschinen (G) angetrieben wird oder werden, und unter Verwendung der einen oder der ersten elektrischen Maschinen (G) bereitgestellter Strom als Netzstrom bereitgestellt wird.

8. Verfahren nach Anspruch 7, bei dem die eine oder zumindest eine der mehreren Elektrolyseeinheiten in dem ersten Betriebsmodus als zumindest eine Festoxidelektrolysezelle und in dem zweiten Betriebsmodus als zumindest eine Festoxidbrennstoffzelle betrieben wird oder werden und/oder bei dem die eine oder die mehreren, zusätzlich zu der einen oder den mehreren Elektrolyseeinheiten (10) bereitgestellte Brennstoffzellen als eine oder mehrere Festoxidbrennstoffzellen betrieben wird oder werden.

9. Verfahren nach einem der Ansprüche 1 bis 8, bei dem die eine oder zumindest eine der mehreren Elektrolyseeinheiten (10) für eine alkalische Elektrolyse mit einer uni- oder bipolaren Elektrodenanordnung und/oder für eine Chlor-Alkali-Elektrolyse eingerichtet ist und/oder unter Verwendung einer protonenleitenden lonenaustauschmembran oder unter Verwendung einer Anionenaustauschermembran betrieben wird.

10. Verfahren nach einem der vorstehenden Ansprüche, bei dem der Netzstrom Strom ist, der unter Verwendung einer oder mehrerer Photovoltaikanlagen, unter Verwendung einer oder mehrerer Windkraftanlagen und/oder unter Verwendung einer oder mehrerer Stromspeichereinheiten in ein Netz gespeist wird.

11. Verfahren nach einem der vorstehenden Ansprüche, bei dem Abwärme der Stromwandelanordnung (20) zumindest zu einem Teil in der einen oder zumindest einer der mehreren Elektrolyseeinheiten (10) genutzt wird.

12. Verfahren nach einem der vorstehenden Ansprüche, bei dem in dem ersten Betriebsmodus mittels der einen oder der mehreren, generatorisch betreibbarenzweiten elektrischen Maschinen (G) Wechselstrom generiert wird, der mittels einer oder mehrerer Gleichrichteranordnungen in den Elektrolysewechselstrom gewandelt wird.

13. Anlage (100, 200) zur Herstellung von Wasserstoff mittels Wasserelektrolyse, die eine oder mehrere Elektrolyseeinheiten (10) und eine Stromwandelanordnung (20) aufweist und dafür eingerichtet ist, zumindest in einem ersten Betriebsmodus der einen oder den mehreren Elektrolyseeinheiten (10) Elektrolysegleichstrom zuzuführen und den Elektrolysegleichstrom unter Verwendung der Stromwandelanordnung (20) aus Netzstrom bereitzustellen, wobei die Stromwandelanordnung (20) eine oder mehrere motorisch betreibbare erste elektrische Maschinen (M) und eine oder mehrere generatorisch betreibbare zweite elektrische Maschinen (G) aufweist, und wobei die Anlage (100) dafür eingerichtet ist, die eine oder die mehreren ersten elektrischen Maschinen (M) unter Verwendung des Netzstroms zu betreiben, die eine oder die mehreren zweiten elektrischen Maschinen (G) unter Verwendung der einen oder der mehreren ersten elektrischen Maschinen (M) anzutreiben, und den Elektrolysegleichstrom unter Verwendung der einen oder der mehreren zweiten elektrischen Maschinen (G) bereitzustellen.

14. Anlage (100, 200) nach Anspruch 13, die zur Durchführung eines Verfahrens nach einem der Ansprüche 1 bis 12 eingerichtet ist.
